# EUROPÄISCHE PATENTSCHRIFT

(11) **EP 2 345 853 B1**
(45) Veröffentlichungstag und Bekanntmachung des Hinweises auf die Patenterteilung: **19.04.2017**
(21) Anmeldenummer: 10193594.8
(22) Anmeldetag: 03.12.2010
(51) Int. Cl.: F24F 5/00, F24F 3/14, F24F 12/00

(54) **Sorptionswärmetauscher und Steuerung hierfür**
Sorption heat exchanger and control for same
Echangeur thermique à sorption et commande associée

(30) Priorität: 05.12.2009 DE 102009057159
(43) Veröffentlichungstag der Anmeldung: 20.07.2011
(73) Patentinhaber: Robert Bosch GmbH, 70442 Stuttgart (DE)
(72) Erfinder: Danne, Thomas, 71634 Ludwigsburg (DE); Weil, Thomas, 71665 Vaihingen (DE); Preissner, Marcus, 71665 Vaihingen (DE)

(56) Entgegenhaltungen:
- EP-B1- 1 508 015
- WO-A1-2005/119145
- DE-A1- 19 750 838
- US-A- 5 950 447
- US-B1- 6 318 106

## Beschreibung

Die Erfindung betrifft ein Verfahren zum Erwärmen und Führen eines Luftstroms, welcher mindestens zwei Sorptionswärmetauscher zum Zweck der Frischluftkonditionierung mit Luft versorgt, nach dem Oberbegriff des Patentanspruchs 1.

Weiter betrifft die Erfindung eine Vorrichtung zum Erwärmen und Führen eines Luftstroms, welcher mindestens zwei Sorptionswärmetauscher zum Zweck der Frischluftkonditionierung mit Luft versorgt, gemäß dem Oberbegriff des Anspruchs 3.

Zudem betrifft die Erfindung eine Sorptionswärmetauschervorrichtung, insbesondere eine Sorptionswärmetauschervorrichtung zum Frischluftkonditionieren, gemäß dem Oberbegriff des Anspruchs 10.

Sorptionswärmetauscher und Verfahren für deren Betrieb sind allgemein aus dem Stand der Technik bekannt.

Aus der US 6318106 B1 ist ein Luftkonditionierer zum Erwärmen und Führen eines Luftstroms bekannt, wobei der Luftstrom zwei Sorptionswärmetauscher zum Zwecke der Frischluftkonditionierung mit Luft versorgt. Die Sorbtionswärmetauscher werden wechselseitig in einem Adsorbtionsmodus und einem Regenerationsmodus betrieben.

Aus der EP 1 508 015 B1 ist ein Sorptionswärmetauscher mit einer Mehrzahl von Wärmetauscherkanälen in einem thermischen Kontakt mit entsprechenden Sorptionskanälen bekannt, wobei die Sorptionskanäle ein Sorptionsmaterial umfassen, welches auf ihren inneren Oberflächen befestigt ist. Dabei sind die Wärmetauscherkanäle dafür vorgesehen, dass sie ein Kühlfluid aufnehmen, und die Sorptionskanäle sind dafür vorgesehen, dass sie ein zu konditionierendes Fluid aufnehmen. Von diesem Fluid ist mindestens eine Komponente zu extrahieren, wobei das Sorptionsmaterial für die Sorption mindestens einer Komponente des zu konditionierenden Fluids geeignet ist. Das Kühlfluid, insbesondere feuchte Luft, kann durch Befeuchtungskomponenten vor dem Eintritt in den Wärmetauscher gekühlt werden, wobei Befeuchtungskomponenten für die Befeuchtung oder die Übersättigung des Kühlfluids vorhanden sind.

Der bekannte Sorptionswärmetauscher wird zur Frischluftkonditionierung genutzt. Hierbei wird Luft in einer Komponente sowohl entfeuchtet als auch gekühlt. Dazu werden zwei Sorptionswärmetauscher benötigt. In einem der zwei Sorptionswärmetauscher findet die Kühlung und Entfeuchtung statt. Da die Sorptionswärmetauscher nur eine bestimmt Menge Feuchtigkeit aufnehmen können, wird je ein Sorptionswärmetauscher regeneriert, d. h. die Feuchtigkeit wird ausgetrieben. Es befindet sich danach jeweils ein Sorptionswärmetauscher in der Kühl- und Entfeuchtungsphase - im Folgenden als Adsorption bezeichnet - und ein Sorptionswärmetauscher in der Regenerationsphase - diese ist aufgeteilt in Desorption und Zwischenkühlen -, wobei die Zustände je Sorptionswärmetauscher zyklisch wechseln, um einen quasikontinuierlichen Betrieb sicherzustellen. Der zyklische Betrieb ist auch mit mehr als zwei Sorptionswärmetauschern denkbar. Nachfolgend werden die einzelnen Zustände gemäß dem Stand der Technik im Detail beschrieben:
Adsorption bedeutet im Sinne der vorliegenden Erfindung, dass Außenluft durch die Sorptionsseite des Sorptionswärmetauschers geführt und anschließend in den Gebäudezuluftkanal als Zuluft geleitet wird. Das sich im Sorptionswärmetauscher befindliche Sorbens wird dabei beladen, d.h., es nimmt Feuchtigkeit aus der Luft auf, wodurch die Luft getrocknet wird. Dabei entsteht Sorptionswärme. Um Letztere abzuführen und gleichzeitig die Luft zu kühlen, wird auf der Kühlseite des Sorptionswärmetauschers die Gebäudeabluft genutzt, welche vor dem Eintritt in den Sorptionswärmetauscher durch eine adiabate Verdunstungskühlung gekühlt wird. Die Gebäudeabluft, welche nach diesem Prozess warm und feucht ist, wird anschließend als Fortluft fortgeführt. Dieser Prozess ist zeitlich begrenzt, da das Sorbens im Sorptionswärmetauscher nur eine endliche Menge Feuchtigkeit aufnehmen kann. Des Weiteren nimmt die Geschwindigkeit der Sorption mit steigender Beladung ab.

Desorption bedeutet im Sinne der vorliegenden Erfindung, dass in dem Sorptionswärmetauscher, welcher gerade nicht für die Frischluftkonditionierung genutzt wird, das adsorbierte Wasser aus dem Sorbens ausgetrieben wird. Dazu wird in einer der denkbaren Verfahren erhitzte Luft bei ca. 65-85°C durch den Sorptionskanal geleitet und als Fortluft fort geführt.

Zwischenkühlen bedeutet im Sinne der vorliegenden Erfindung, dass, da die Sorptionswärmetauscher nach der Desorption aufgeheizt sind, diese zwischen Desorption und Adsorption gekühlt werden, damit die sensible Wärmemenge, welche im Sorptionswärmetauscher gespeichert ist, nicht während der Adsorptionsphase an die Gebäudezuluft abgegeben wird. Hierbei wird Luft durch die adiabate Verdunstungskühlung geleitet und anschließend dem Fortluft-Luftschacht zugeführt. Dies kühlt den Sorptionswärmetauscher von der Kühlseite aus.

Hieraus ergibt sich, dass beide Sorptionswärmetauscher abwechselnd in zwei verschiedenen Modi betrieben werden: der Adsorption, d. h. Kühlen und Entfeuchten der Zuluft, der Regeneration, bestehend aus Desorption, d. h. Austreiben des Wassers aus dem Sorbens und der Zwischenkühlung, d. h. Vorkühlen des Sorptionswärmetauschers vor der erneuten Adsorption. Hierzu müssen die verschiedenen Luftströme (Zu-, Ab-, Außen- und Fortluft) auf unterschiedliche Weise geschaltet und unter Umständen auch erhitzt werden, damit die beiden Sorptionswärmetauscher in dem jeweils passenden Modus betrieben werden.

Um die verschiedenen Luftströme zu schalten, ist eine entsprechende Verschaltung erforderlich.

Um den zu einem Sorptionswärmetauscher führenden Außenluftstrom zum Zweck der Desorption zu erhitzen, wird im Allgemeinen pro Sorptionswärmetauscher je eine Wärmetauschereinheit verwendet, welche im entsprechenden Anschluss des Sorptionswärmetauschers integriert ist. Dies hat den Nachteil, dass, unabhängig vom Betriebszustand des Sorptionswärmetauschers, d. h. Adsorption, Desorption und Zwischenkühlung, die Luft durch die Wärmetauschereinheit geführt wird. Dies hat zur Folge, dass die Wärmetauschereinheit zyklisch an- und abgeschaltet werden muss, um die Luft entsprechend zu erhitzen bzw. unbehandelt zu lassen. Ein ständiges Aufheizen und Abkühlen der Wärmetauschereinheit ist somit nicht zu vermeiden. Aufgrund der thermischen Masse der Wärmetauschereinheit hat dies wiederum zur Folge, dass der durch Letztere geführte Luftstrom ungewollt erhitzt oder gekühlt wird, wodurch der Wirkungsgrad des Gesamtprozesses signifikant verschlechtert wird. Wird etwa nach einer Heizphase, in der sich die Wärmetauschereinheit aufgeheizt hat, zu einer Nicht-Heizphase gewechselt, wird der Luftstrom aufgrund der thermischen Masse weiterhin ungewollt erhitzt, bis die in der Wärmetauschereinheit gespeicherte Wärme durch den Luftstrom abgeführt wurde. Wird nach der Auskühlung des Wärmetauschers dieser wieder eingeschaltet, muss neben der zu erwärmenden Luft auch der Wärmetauscher selbst erhitzt werden, was eine niedrigere Heißlufttemperatur zur Folge hat. Diese thermodynamischen Nachteile führen zu einem suboptimalen Betrieb der Sorptionswärmetauscher.

Der Erfindung liegt die Aufgabe zugrunde, eine Vorrichtung und ein Verfahren zum Erwärmen und Führen eines Luftstroms, welcher zwei oder mehr Sorptionswärmetauscher zum Zweck der Frischluftkonditionierung mit Luft versorgt, zu schaffen, wobei ein thermodynamisch günstiger Betrieb der Sorptionswärmetauscher realisiert wird.
Weiter liegt der Erfindung die Aufgabe zugrunde, eine Sorptionswärmetauschervorrichtung mit einer erfindungsgemäßen Vorrichtung zu schaffen, welche eine effektive Arbeitsweise bei reduziertem thermischen Aufwand realisiert, wobei die Wärmemenge, welche zur Desorption genutzt wird, als thermischer Aufwand betrachtet wird.

Weiter liegt der Erfindung die Aufgabe zugrunde, eine Sorptionswärmetauschervorrichtung mit einer erfindungsgemäßen Vorrichtung zu schaffen, welche thermische Verluste durch das wechselweise Heizen und Kühlen der Wärmetauschervorrichtung, durch welche die Wärme in den Prozess eingebracht wird, verhindert.

Erfindungsgemäß wird dies durch die Gegenstände mit den Merkmalen des Patentanspruches 1, des Patentanspruchs 3 und des Patentanspruchs 10 gelöst. Vorteilhafte Weiterbildungen sind den Unteransprüchen zu entnehmen.

Das erfindungsgemäße Verfahren zum Erwärmen und Führen eines Luftstroms, welcher mindestens zwei Sorptionswärmetauscher zum Zweck der Frischluftkonditionierung mit Luft versorgt, wobei die Sorptionswärmetauscher mit je einer Sorptionsseite (12a, 12b) und einer Kühlseite (13a, 13b) mit Hilfe einer als offenes System ausgeführten Sorptionswärmetauschervorrichtung (10) mit zyklisch umschaltbaren Schalteinheiten (6a-6h), wechselseitig (wechselweise, abwechselnd) in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen, wobei in der Adsorptionsphase Außenluft über jeweils einen der Anschlüsse (5a, 5b) durch die Sorptionsseite (12a, 12b) des jeweiligen Sorptionswärmetauschers (11a, 11b) zu einem Anschluss (17) für die Gebäudezuluft geleitet und dabei auf der Sorptionsseite (12a, 12b) gekühlt und entfeuchtet wird, wobei in der Desorptionsphase erhitzte Außenluft durch die Sorptionsseite (12a, 12b) des jeweiligen Sorptionswärmetauschers (11a, 11b) geleitet und als Fortluft über einen Fortluftanschluss (16)fortgeführt wird, ist dadurch gekennzeichnet, dass die Luft erwärmungsfrei den Anschüssen der Sorptionswärmetauscher für unbehandelte, d. h. nicht erwärmte, Luft durch einen separaten Leitungsabschnitt zur Versorgung der mindestens zwei Sorptionswärmetauscher zugeführt wird. Für unbehandelte, d. h. nicht erwärmte, Luft ist ein separater Leitungsabschnitt zur Versorgung der zwei oder mehr Sorptionswärmetauscher vorgesehen, und die Luft wird somit erwärmungsfrei den Anschüssen der Sorptionswärmetauscher zugeführt. Die Versorgung der Sorptionswärmetauscher durch die Wärmetauschereinheit, durch welche die Luft erwärmt oder unbehandelt, d. h. nicht erwärmt, geleitet wird, erfolgt somit unabhängig voneinander.

In einer Ausführungsform des erfindungsgemäßen Verfahrens ist vorgesehen, dass die Luft erwärmt den Anschüssen der mindestens zwei Sorptionswärmetauscher für erwärmte Luft durch einen separaten Leitungsabschnitt, welcher die Luft durch eine Wärmetauschereinheit führt, zur Versorgung der mindestens zwei Sorptionswärmetauscher zugeführt wird. Für erwärmte Luft ist ein separater Leitungsabschnitt, welcher die Luft durch eine Wärmetauschereinheit führt, zur Versorgung der zwei oder mehr Sorptionswärmetauscher über die entsprechenden Anschlüsse vorgesehen.

Die erfindungsgemäße Vorrichtung zum Erwärmen und Führen eines Luftstroms, welcher mindestens zwei Sorptionswärmetauscher zum Zweck der Frischluftkonditionierung mit Luft versorgt, wobei die Sorptionswärmetauscher mit je einer Sorptionsseite 12a, 12b und einer Kühlseite 13a, 13b mit Hilfe einer als offenes System ausgeführten Sorptionswärmetauschervorrichtung (10) mit zyklisch umschaltbaren Schalteinheiten (6a-6h), wechselseitig (wechselweise, abwechselnd) in einem Adsorptionsmodus mit einer Adsorptionsphase und einem Regenerationsmodus mit einer Zwischenkühlphase und einer Desorptionsphase, betrieben werden, um eine quasikontinuierliche Konditionierung durchzuführen, wobei Außenluft über einen von zwei Anschlüssen (5a, 5b) kommend mit mehreren, verzweigten Leitungsabschnitten durch die Sorptionswärmetauschervorrichtung (10) geführt wird, wobei in der Adsorptionsphase Außenluft über jeweils einen der Anschlüsse (5a, 5b) durch die Sorptionsseite (12a, 12b) des jeweiligen Sorptionswärmetauschers (11a, 11b) zu einem Anschluss (17) für die Gebäudezuluft geleitet und dabei auf der Sorptionsseite (12a, 12b) gekühlt und entfeuchtet wird, wobei in der Desorptionsphase erhitzte Außenluft durch die Sorptionsseite (12a, 12b) des jeweiligen Sorptionswärmetauschers (11a, 11b) geleitet und als Fortluft über einen Fortluftanschluss (16) fortgeführt wird, und wobei in der Zwischenkühlphase Außenluft über jeweils einen der Anschlüsse (5a, 5b) durch die Kühlseite (13a, 13b) des jeweiligen Sorptionswärmetauschers (11 a, 11 b) geleitet und als Fortluft über den Fortluftanschluss fortgeführt wird, ist dadurch gekennzeichnet, dass für unbehandelte, d. h. nicht erwärmte, Luft ein separater Leitungsabschnitt zur Versorgung der mindestens zwei oder mehr Sorptionswärmetauscher vorgesehen ist und die Luft somit erwärmungsfrei den Anschlüssen der Sorptionswärmetauscher zugeführt wird. Für unbehandelte, d. h. nicht erwärmte, Luft ist ein separater Leitungsabschnitt zur Versorgung der zwei oder mehr Sorptionswärmetauscher vorgesehen, und die Luft wird somit erwärmungsfrei den entsprechenden Anschlüssen der Sorptionswärmetauscher zugeführt. Die Versorgung der Sorptionswärmetauscher durch die Wärmetauschereinheit, durch welche die Luft erwärmt oder unbehandelt, d. h. nicht erwärmt, geleitet wird, erfolgt somit unabhängig voneinander.

In einer Ausführungsform der vorliegenden Erfindung ist vorgesehen, dass für erwärmte Luft ein separater Leitungsabschnitt, welcher die Luft durch eine Wärmetauschereinheit führt, zur Versorgung der mindestens zwei Sorptionswärmetauscher über die entsprechenden Anschlüsse vorgesehen ist.

Bei einer weiteren Ausführungsform der vorliegenden Erfindung ist vorgesehen, dass die separaten Leitungsabschnitte und die Anschlüsse der Sorptionswärmetauscher über einen Wärmetauscher und Schalteinheiten gekoppelt sind, so dass entweder erwärmte oder unbehandelte, d. h. nicht erwärmte Luft den jeweiligen Sorptionswärmetauschern zuführbar ist.

In noch einer weiteren Ausführungsform der vorliegenden Erfindung ist vorgesehen, dass eine Schaltmatrix, umfassend verschiedene Schalteinheiten, vorgesehen ist, über die die erwärmte und die unbehandelte Luft entsprechend an die mindestens zwei Anschlüsse der entsprechenden Sorptionswärmetauscher zugeführt wird.

In noch einer weiteren Ausführungsform der vorliegenden Erfindung ist vorgesehen, dass ein die Schaltmatrix realisierendes Mehrwegeventil vorgesehen ist, über welches die erwärmte und nicht erwärmte Luft entsprechend an die mindestens zwei Anschlüsse der entsprechenden Sorptionswärmetauscher zugeführt wird. Die erwärmte und nicht erwärmte Luft wird somit über ein Mehrwegeventil, welches die Schaltmatrix ersetzt, entsprechend an die zwei oder mehr Sorptionswärmetauscher zugeführt.

In noch einer weiteren Ausführungsform der vorliegenden Erfindung ist vorgesehen, dass die Wärmetauschereinheit zwischen den Anschlüssen der beiden Sorptionswärmetauscher positioniert ist, und die Luftführung über zwei Klappen geregelt wird.

In noch einer weiteren Ausführungsform der vorliegenden Erfindung ist vorgesehen, dass der Wärmetauscher der Vorschaltung als Wasser-Luft-Wärmetauscher ausgebildet ist.

Die erfindungsgemäße Sorptionswärmetauschervorrichtung, insbesondere eine Sorptionswärmetauschervorrichtung zum Frischluftkonditionieren, bei der mindestens zwei oder mehr Sorptionswärmetauscher wechselseitig (wechselweise, abwechselnd) in einem Adsorptionsmodus mit einer Adsorptionsphase und einem Regenerationsmodus mit einer Zwischenkühlphase und einer Desorptionsphase, betrieben werden, um eine quasikontinuierliche Konditionierung durchzuführen, ist dadurch gekennzeichnet, dass eine erfindungsgemäße Vorrichtung vorgesehen ist.

Mit dem erfindungsgemäßen Verfahren, der erfindungsgemäßen Vorrichtung und der erfindungsgemäßen Sorptionswärmetauschervorrichtung werden insbesondere die folgenden Vorteile realisiert:
Durch die separaten Leitungsabschnitte für erwärmte bzw. unbehandelte Luft ist eine bessere Beschaltung realisiert, wodurch eine thermodynamisch optimierte Vorrichtung geschaffen ist, so dass der Wirkungsgrad der Vorrichtung bzw. der Sorptionswärmetauschervorrichtung verbessert ist. Durch die drei verschiedenen Betriebszustände Adsorption, Desorption und Zwischenkühlung ergibt sich, dass beide Sorptionswärmetauscher zu jeder Zeit mit Außenluft versorgt werden müssen. Jedoch wird die Luft während der Adsorption und dem Zwischenkühlen so kalt wie möglich, und während der Desorption so heiß wie möglich gehalten. Erfindungsgemäß ist für jeden Sorptionswärmetauscher jeweils ein separater Luftschacht für Heißluft (d. h. erwärmte Luft) und Kaltluft (d. h. nicht erhitzte oder unbehandelte Luft) vorgesehen. Durch diese Verschaltung wird der Wirkungsgrad des Geräts signifikant erhöht, da kein ungewolltes Aufwärmen und/oder Abkühlen der Wärmetauscher stattfindet. Die Kaltluft ist unbehandelte AU-Luft, wohingegen die Heißluft z. B. von einem Luft/Wasser-Wärmetauscher erhitzt wird. Die Auswahl des entsprechenden Luftstroms für die jeweiligen Sorptionswärmetauscher erfolgt entweder durch nach- oder vorgeschaltete Klappen, auch in Form einer Schaltmatrix denkbar, oder durch ein Mehrwegeventil, welches für die verschiedenen sich ergebenden Betriebsmodi konfiguriert ist.

Des Weiteren wird durch die erfindungsgemäße Vorrichtung die Baugröße des Gesamtgeräts signifikant verringert, da nur noch ein statt zwei Wärmetauscher benötigt ist.

Die Zeichnungen stellen mehrere Ausführungsbeispiele der Erfindung dar und zeigen in den Figuren:
- Fig. 1: schematisch ein Ausführungsbeispiel der erfindungsgemäßen Vorrichtung mit zwei separaten Leitungsabschnitten und vier Schalteinheiten bzw. einem Mehrwegeventil.
- Fig. 2: schematisch ein Ausführungsbeispiel der erfindungsgemäßen Vorrichtung mit zwei separaten Leitungsabschnitten bei der der Wärmetauscher zwischen den beiden Anschlüssen der Sorptionswärmetauscher positioniert ist.
- Fig. 3: schematisch ein Schaltungsschema einer Sorptionswärmetauschervorrichtung, welches der erfindungsgemäßen Vorrichtung vorgeschaltet wird.

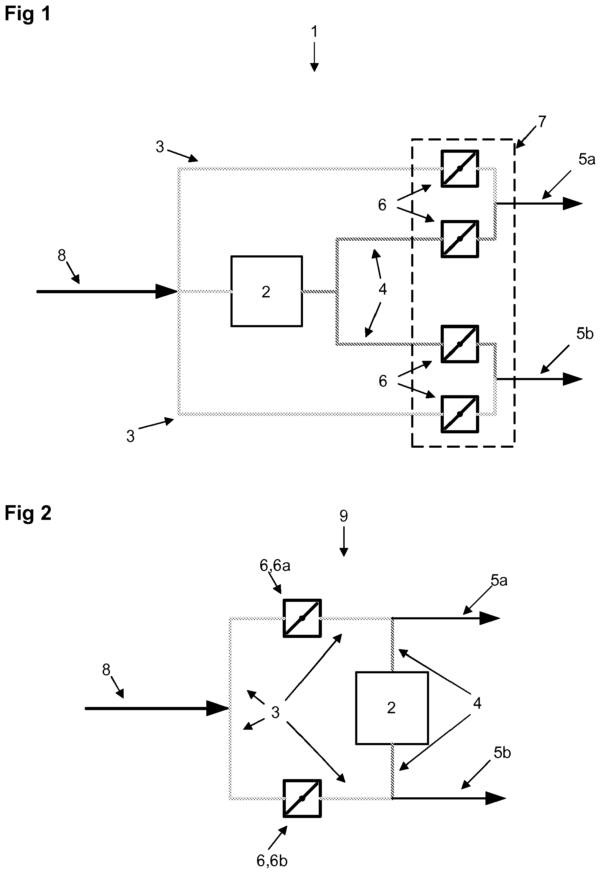

Fig. 1 zeigt schematisch ein Ausführungsbeispiel der erfindungsgemäßen Vorrichtung 1 mit einem separaten Leitungsabschitt für erhitzte Luft 4, einem separaten Leitungsabschnitt für nicht erhitzte Luft 3, den Anschlüssen für die entsprechenden Sorptionswärmetauscher 5a und 5b und einem Wärmetauscher 2. Die Leitungsabschnitte 3 und 4 sind in der Vorrichtung 1 über den Wärmetauscher 2 und Schalteinheiten 6 gekoppelt, sodass entweder erwärmte oder erwärmungsfreie Außenluft dem jeweiligen Anschluss 5a, 5b der Sorptionswärmetauscher zuführbar ist. Der Wärmetauscher 2 ist in dem Ausführungsbeispiel nach Fig. 1 als Luft/Wasser-Wärmetauscher ausgebildet. In der Vorrichtung nach Fig. 1 verzweigt der Leitungsabschnitt 8, der Außenluft zuführt, in zwei Leitungsabschnitte 3 zur Kaltluftweiterleitung und einen Leitungsabschnitt, der über einen Wärmetauscher 2 führt und hinter dem Wärmetauscher 2 in zwei Heißluft-Leitungsabschnitte 4 verzweigt. Die Leitungsabschnitte 3 und 4 sind dann jeweils über Schalteinheiten 6 mit den Anschlüssen 5a und 5b der beiden Sorptionswärmetauscher hydraulisch koppelbar.

Durch drei verschiedene Betriebsphasen ergibt sich, dass die beiden zu versorgenden Sorptionswärmetauscher, welche mit den beiden Anschüssen 5a und 5b verbunden sind, zu jeder Zeit mit Außenluft versorgt werden müssen. Jedoch sollte die Luft während der Adsorptionsphase und der Zwischenkühlphase so kalt wie möglich, und während der Desorptionsphase so heiß wie möglich sein. Hierdurch ergibt sich auch, dass es einen Zeitraum gibt, in dem beide Sorptionswärmetauscher mit kalter Luft versorgt werden müssen, und zwar, wenn einer der Sorptionswärmetauscher in der Adsorption betrieben und der andere zwischengekühlt wird. Für jeden Sorptionswärmetauscher ist deshalb jeweils ein separater Heiß- und Kaltluftschacht (Leitungsabschnitte 3 bzw. 4) vorgesehen. Durch diese Verschaltung ist es möglich, den Wirkungsgrad der Vorrichtung 1 signifikant zu erhöhen, da kein unnötiges Aufwärmen und Abkühlen der Wasser/Luft-Wärmetauscher 2 stattfindet. Die Kaltluft ist unbehandelte Außenluft, wohingegen die Heißluft von einem Wasser/Luft-Wärmetauscher 2 erhitzt wird. Die Auswahl des entsprechenden Luftstroms für die jeweiligen Sorptionswärmetauscher erfolgt durch je zwei Auf/Zu-Klappen 6, wie in der Fig. 1 gezeigt, oder alternativ durch je eine 3/2-Wegeklappe. Die Schalteinheiten 6 sind als Schaltmatrix 7 denkbar, wobei die Schaltmatrix 7 auch durch ein Mehrwegeventil, welches die entsprechenden verschiedenen Schaltzustände abbildet, ersetzt werden kann. Ein anderes Ausführungsbeispiel der als Vorschaltung ausgebildeten Vorrichtung 1 ist in Fig. 2 dargestellt.

Fig. 2 zeigt schematisch ein Ausführungsbeispiel der erfindungsgemäßen Vorrichtung 9. Diese als Vorschaltung ausgeführte Vorrichtung 9 ist gegenüber der Vorrichtung 1 nach Fig. 1 hinsichtlich der Klappenanzahl reduziert. Ein Außenluftzufuhrkanal 8 verzweigt in zwei Leitungsabschnitte 3, welche nicht die nicht erwärmte Außenluft führen. Diese sind jeweils über eine als Stellelement ausgebildete Schalteinheit 6 regelbar. Hinter den beiden Stellelementen 6 ist quer der Wärmetauscher 2 geschaltet. Je nach Stellung der Stellelemente 6 lässt sich nun Heiß- oder Kaltluft dem jeweiligen Sorptionswärmetauscher zuführen. Der vordere Teil der Leitungsabschnitte 3 vor dem Wärmetauscher 2 führt so stets unbehandelte Außenluft. Der quer geschaltete Leitungsabschnitt 4 führt die erhitzte Außenluft. Die drei Betriebsmodi (Betriebsphasen) lassen sich wie folgt über die jeweiligen Stellungen der Stellelemente 6 einstellen.

Um den ersten Sorptionswärmetauscher, welcher mit dem Anschluss 5a verbunden ist, mit kalter Außenluft zu versorgen und den zweiten Sorptionswärmetauscher, welcher mit dem Anschluss 5b verbunden ist, mit erhitzter Außenluft, wird das Stellelement 6a geöffnet und das Stellelement 6b geschlossen. Die Außenluft für den zweiten Sorptionswärmetauscher (Anschuss 5b) strömt nun durch den Wärmetauscher 2 und wird erhitzt.

Um den ersten Sorptionswärmetauscher, welcher mit dem Anschluss 5a verbunden ist, mit heißer Außenluft zu versorgen und den zweiten Sorptionswärmetauscher, welcher mit dem Anschluss 5b verbunden ist, mit kalter Außenluft, wird das Stellelement 6a geschlossen und das Stellelement 6b geöffnet. Die Außenluft für den ersten Sorptionswärmetauscher (Anschuss 5a) strömt nun durch den Wärmetauscher 2 und wird erhitzt.

Um beide Sorptionswärmetauscher mit unbehandelter Außenluft zu versorgen, werden beide Stellelemente 6a und 6b geöffnet. Dadurch, dass zu beiden Ausgängen zu den Sorptionswärmetauschern 5a, 5b im Wesentlichen der gleiche Volumenstrom fließt, liegt an beiden Seiten des Wärmetauschers 2 der im Wesentlichen gleiche Absolutdruck an. Daher strömt keine Luft durch den Wärmetauscher 2 und die Luftströme werden nicht ungewollt (unnötig) erhitzt.

Der Fall, dass beide Sorptionswärmetauscher mit erhitzter Außenluft versorgt werden müssen, existiert bei der hier dargestellten Ausführungsform der Sorptionswärmetauschervorrichtung nicht.

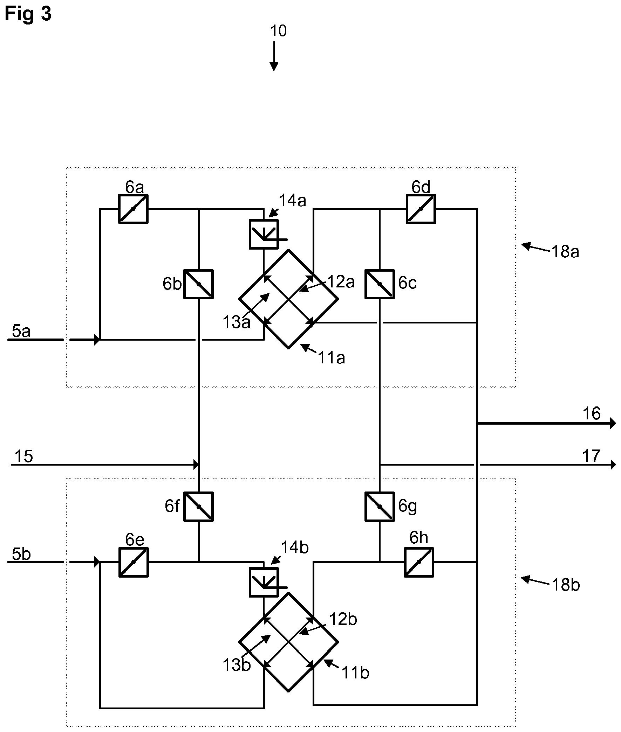

Fig. 3 zeigt schematisch ein Schaltungsschema einer Sorptionswärmetauschervorrichtung 10 mit acht als Stellglieder ausgebildeten Schalteinheiten 6a bis 6h. Die Sorptionswärmetauschervorrichtung 10 die nach Fig. 3 zur Frischtuftkonditionierung ausgebildet ist, umfasst zwei Sorptionswärmetauscher 11a, 11b, welche in zwei entsprechenden Sorptionswärmetauscherkreisen 18a, 18b integriert sind. Die Sorptionswärmetauscher 11a, 11 b können sowohl als Kreuz- als auch als Kreuz-Gegenstrom-Wärmetauscher ausgebildet sein, wobei das Symbol für den Sorptionswärmetauscher 11 a, 11 b in Fig. 3 einen Kreuzstrom-Wärmetauscher symbolisiert. Zur Steuerung der Sorptionswärmetauschervorrichtung 10 sind die Schalteinheiten 6a bis 6h vorgesehen. Durch zyklisches Umschalten der Schalteinheiten 6a bis 6h ist es möglich, die beiden Sorptionswärmetauscher 11a, 11b in den drei verschiedenen Betriebsphasen Adsorption, Desorption und Zwischenkühlung zu betreiben und somit einen quasikontinuierlichen Betrieb zu realisieren. Die Außenluft wird, über einen der beiden Anschlüsse 5a und 5b kommend, mit mehreren, verzweigten Leitungsabschnitten durch die Sorptionswärmetauschervorrichtung 10 hindurchgeführt. Der Anschluss 5a versorgt den Sorptionswärmetauscherkreis 18a, wohingegen der Anschluss 5b den Sorptionswärmetauscher 18b versorgt. Um die Außenluft gesteuert durch die Sorptionswärmetauschervorrichtung 10 hindurchzuführen, sind entsprechende Stellglieder oder Schalteinheiten 6a bis 6h vorgesehen. In dem Beispiel nach Fig. 3 sind die acht Schalteinheiten 6a bis 6h als Zwei-Wegeventile ausgebildet.

Beispielhaft am Sorptionswärmetauscherkreislauf 18a wird nun folgend dargestellt, wie die drei Betriebszustände mit Hilfe der Stellglieder 6a bis 6d realisiert werden.

Bei der Adsorption strömt unbehandelte Außenluft vom Anschluss 5a über die Sorptionsseite 12a durch die geöffnete Klappe 6c zum Anschluss 17 der Gebäudezuluft. Die Klappen 6a und 6d sind dabei geschlossen, so dass der Strömungsweg eindeutig festgelegt ist. Bei dem Durchströmen der Sorptionsseite 12a wird die Außenluft im Sorptionswärmetauscher 11a entfeuchtet und gekühlt. Die freigesetzte Sorptionswärme und die sensible Wärme des Außenluftstoms werden von der Luft, welche die Kühlseite 13a durchströmt fortgeführt. Dieser Luftweg ist wie folgt ausgebildet: Die über den Leitungsabschnitt 15 geführte Gebäudeabluft wird über das geöffnete Stellglied 6b zur Verdunstungskühlung 14a geführt. In der Verdunstungskühlung 14a wird der Luftstrom befeuchtet und somit gekühlt. Die adiabat befeuchtete Luft strömt zusammen mit nicht verdunstetem gekühltem Wasser durch die Kühlseite 13a des Sorptionswärmetauschers 11a. Anschließend wird die Luft über den Fortluftanschluß 16 fortgeführt. Durch die geschlossenen Ventile 6a und 6d wird ein Vermischen der beiden Luftströme verhindert.

Bei der Desorption strömt erhitzte Außenluft vom Anschluss 5a über die Sorptionsseite 12a und wird über die geöffnete Klappe 6d dem Fortluftanschluss 16 zugeführt. Beim Durchströmen des Sorptionskanals 12a wird das adsorbierte Wasser aus dem Sorptionsmaterial ausgetrieben und mit der Strömung fort geführt. Die Außenluft wird dabei durch eine erfindungsgemäße Vorrichtung 1 oder 9 erhitzt. Die geschlossenen Klappen 6a, 6b und 6c stellen sicher, dass kein erzwungener Luftwechsel auf der Kühlseite 13a stattfindet. Weiterhin wird sichergestellt, dass die Sorptionswärmetauschereinheit 18a weder mit dem Gebäudeabluftanschluss 15 noch mit dem Gebäudezuluftanschluss 17 hydraulisch verbunden ist.

Bei der Zwischenkühlung strömt unbehandelte Außenluft vom Anschluss 5a über das geöffnete Stellglied 6a zu der Befeuchtungseinheit 14a. Nach der Befeuchtung wird der Luftstrom durch die Kühlseite 13a des Sorptionswärmetauschers 11a und anschließend zum Anschluss 16 der Fortluft geführt. Die Klappen 6b, 6c und 6d sind geschlossen, damit kein erzwungener Luftwechsel auf der Sorptionsseite 12a stattfindet. Wie bei der Desorption besteht auch im Fall der Zwischenkühlung keine hydraulische Verbindung zwischen der Sorptionswärmetauschereinheit 18a und dem Gebäudeabluft- bzw. Gebäudezuluftanschluss (15 bzw. 17).

Für alle drei Zustände gilt Gleiches analog für den Sorptionswärmetauscherkreislauf 14b, auf dessen detaillierte Beschreibung hier entsprechend verzichtet wird, da der Aufbau der beiden Sorptionswärmetauscherkreisläufe 14a, 14b im Wesentlichen gleich ist.

## Patentansprüche

1. Verfahren zum Erwärmen und Führen eines Luftstroms (8), welcher mindestens zwei Sorptionswärmetauscher (11a, 11b) zum Zweck der direkten Frischluftkonditionierung mit Luft versorgt, wobei die Sorptionswärmetauscher (11 a, 11 b) mit je einer Sorptionsseite (12a, 12b) und einer Kühlseite (13a, 13b) mit Hilfe einer als offenes System ausgeführten Sorptionswärmetauschervorrichtung (10) mit zyklisch umschaltbaren Schalteinheiten (6a-6h), wechselseitig in einem Adsorptionsmodus mit einer Adsorptionsphase und einem Regenerationsmodus mit einer Zwischenkühlphase und einer Desorptionsphase betrieben werden, um eine quasikontinuierliche Konditionierung durchzuführen, wobei Außenluft über einen von zwei Anschlüssen (5a, 5b) kommend mit mehreren, verzweigten Leitungsabschnitten durch die Sorptionswärmetauschervorrichtung geführt wird, wobei in der Adsorptionsphase Außenluft über jeweils einen der Anschlüsse (5a, 5b) durch die Sorptionsseite (12a, 12b) des jeweiligen Sorptionswärmetauschers (11 a, 11 b) zu einem Anschluss (17) für die Gebäudezuluft geleitet und dabei auf der Sorptionsseite (12a, 12b) gekühlt und entfeuchtet wird, wobei in der Desorptionsphase erhitzte Außenluft durch die Sorptionsseite (12a, 12b) des jeweiligen Sorptionswärmetauschers (11 a, 11 b) geleitet und als Fortluft über einen Fortluftanschluss (16)fortgeführt wird, und wobei in der Zwischenkühlphase Außenluft über jeweils einen der Anschlüsse (5a, 5b) durch die Kühlseite (13a, 13b) des jeweiligen Sorptionswärmetauschers (11a, 11b) geleitet und als Fortluft über den Fortluftanschluss (16) fortgeführt wird, **dadurch gekennzeichnet, dass** die Luft erwärmungsfrei den Anschlüssen (5a, 5b) der Sorptionswärmetauscher (11 a, 11 b) für unbehandelte Luft durch einen separaten Leitungsabschnitt (3) zur Versorgung der mindestens zwei Sorptionswärmetauscher (11a, 11b) zugeführt wird.

2. Verfahren nach Anspruch 1, **dadurch gekennzeichnet, dass** die Luft erwärmt den Anschlüssen (5a, 5b) der mindestens zwei Sorptionswärmetauscher (11 a, 11 b) für erwärmte Luft durch einen separaten Leitungsabschnitt (4), welcher die Luft durch eine Wärmetauschereinheit (2) führt, zur Versorgung der mindestens zwei Sorptionswärmetauscher (11 a, 11 b) zugeführt wird.

3. Vorrichtung (1, 9) zum Erwärmen und Führen eines Luftstroms (8), welcher mindestens zwei Sorptionswärmetauscher (11a, 11b) zum Zweck der direkten Frischluftkonditionierung mit Luft versorgt, wobei die Sorptionswärmetauscher (11a, 11b) mit je einer Sorptionsseite 12a, 12b und einer Kühlseite 13a, 13b mit Hilfe einer als offenes System ausgeführten Sorptionswärmetauschervorrichtung (10) mit zyklisch umschaltbaren Schalteinheiten (6a-6h) wechselseitig in einem Adsorptionsmodus mit einer Adsorptionsphase und einem Regenerationsmodus mit einer Zwischenkühlphase und einer Desorptionsphase, betreibbar sind, um eine quasikontinuierliche Konditionierung durchzuführen, wobei Außenluft über einen von zwei Anschlüssen (5a, 5b) kommend mit mehreren, verzweigten Leitungsabschnitten durch die Sorptionswärmetauschervorrichtung (10) geführt wird, wobei in der Adsorptionsphase Außenluft über jeweils einen der Anschlüsse (5a, 5b) durch die Sorptionsseite (12a, 12b) des jeweiligen Sorptionswärmetauschers (11a, 11b) zu einem Anschluss (17) für die Gebäudezuluft geleitet und dabei auf der Sorptionsseite (12a, 12b) gekühlt und entfeuchtet wird, wobei in der Desorptionsphase erhitzte Außenluft durch die Sorptionsseite (12a, 12b) des jeweiligen Sorptionswärmetauschers (11 a, 11b) geleitet und als Fortluft über einen Fortluftanschluss (16) fortgeführt wird, und wobei in der Zwischenkühlphase Außenluft über jeweils einen der Anschlüsse (5a, 5b) durch die Kühlseite (13a, 13b) des jeweiligen Sorptionswärmetauschers (11a, 11b) geleitet und als Fortluft über den Fortluftanschluss fortgeführt wird, **dadurch gekennzeichnet, dass** für unbehandelte Luft ein separater Leitungsabschnitt (3) zur Versorgung der mindestens zwei oder mehr Sorptionswärmetauscher (11 a, 11 b) vorgesehen ist und die Luft somit erwärmungsfrei den Anschlüssen (5a, 5b) der Sorptionswärmetauscher (11 a, 11 b) zugeführt wird.

4. Vorrichtung (1, 9) nach Anspruch 3, **dadurch gekennzeichnet, dass** für erwärmte Luft ein separater Leitungsabschnitt (4), welcher die Luft durch eine Wärmetauschereinheit (2) führt, zur Versorgung der mindestens zwei Sorptionswärmetauscher (11a, 11b) über die entsprechenden Anschlüsse (5a, 5b) vorgesehen ist.

5. Vorrichtung (1, 9) nach den Ansprüchen 3 bis 4, **dadurch gekennzeichnet, dass** die separaten Leitungsabschnitte (3, 4) und die Anschlüsse (5a, 5b) über einen Wärmetauscher (2) und Schalteinheiten (6) gekoppelt sind, sodass entweder erwärmte oder unbehandelte Luft den jeweiligen Sorptionswärmetauschern (11 a, 11 b) zuführbar ist.

6. Vorrichtung (1) nach den Ansprüchen 3 bis 5, **dadurch gekennzeichnet, dass** eine Schaltmatrix (7), umfassend verschiedene Schalteinheiten (6), vorgesehen ist, über die die erwärmte und die unbehandelte Luft entsprechend an die mindestens zwei Anschlüsse (5a, 5b) der entsprechenden Sorptionswärmetauscher (11a, 11b) zugeführt wird.

7. Vorrichtung (1, 9) nach den Ansprüchen 3 bis 6, **dadurch gekennzeichnet, dass** ein die Schaltmatrix realisierendes Mehrwegeventil vorgesehen ist, über welches die erwärmte und nicht erwärmte Luft entsprechend an die mindestens zwei Anschlüsse (5a, 5b) der entsprechenden Sorptionswärmetauscher (11) zugeführt wird.

8. Vorrichtung (1, 9) nach den Ansprüchen 3 bis 7, **dadurch gekennzeichnet, dass** die Wärmetauschereinheit (2) zwischen den Anschlüssen (5a und 5b) der beiden Sorptionswärmetauscher (11a, 11b) positioniert ist, und die Luftführung über zwei Klappen (6) geregelt wird.

9. Vorrichtung (1, 9) nach einem der Ansprüche 3 bis 8, **dadurch gekennzeichnet, dass** der Wärmetauscher (2) als Wasser-Luft-Wärmetauscher ausgebildet ist.

10. Sorptionswärmetauschervorrichtung (10), insbesondere eine als offenes System ausgeführte Sorptionswärmetauschervorrichtung mit zyklisch umschaltbaren Schalteinheiten (6a-6h) zum direkten Frischluftkonditionieren, bei der mindestens zwei Sorptionswärmetauscher (11a, 11b)) mit je einer Sorptionsseite 12a, 12b und einer Kühlseite 13a, 13b wechselseitig in einem Adsorptionsmodus mit einer Adsorptionsphase und einem Regenerationsmodus mit einer Zwischenkühlphase und einer Desorptionsphase, betrieben werden, um eine quasikontinuierliche Konditionierung durchzuführen, wobei Außenluft über einen von zwei Anschlüssen (5a, 5b) kommend mit mehreren, verzweigten Leitungsabschnitten durch die Sorptionswärmetauschervorrichtung (10) geführt wird, wobei in der Adsorptionsphase Außenluft über jeweils einen der Anschlüsse (5a, 5b) durch die Sorptionsseite (12a, 12b) des jeweiligen Sorptionswärmetauschers (11 a, 11 b) zu einem Anschluss (17) für die Gebäudezuluft geleitet und dabei auf der Sorptionsseite (12a, 12b) gekühlt und entfeuchtet wird, wobei in der Desorptionsphase erhitzte Außenluft durch die Sorptionsseite (12a, 12b) des jeweiligen Sorptionswärmetauschers (11 a, 11 b) geleitet und als Fortluft über einen Fortlaufanschluss (16) fortgeführt wird, und wobei in der Zwischenkühlphase Außenluft über jeweils einen der Anschlüsse (5a, 5b) durch die Kühlseite (13a, 13b) des jeweiligen Sorptionswärmetauschers (11 a, 11 b) geleitet und als Fortluft über den Fortluftanschluss (16) fortgeführt wird, **dadurch gekennzeichnet, dass** die Sorptionswärmetauschervorrichtung eine Vorrichtung (1, 9) nach einem der vorherigen Ansprüche 3 bis 9 aufweist.

## Claims

1. Method for heating and guiding an air stream (8) which supplies at least two sorption heat exchangers (11a, 11b) with air for the purpose of direct fresh air conditioning, wherein the sorption heat exchangers (11a, 11b), having a respective sorption side (12a, 12b) and a respective cooling side (13a, 13b), are alternately operated in an adsorption mode with an adsorption phase and in a regeneration mode with an intermediate cooling phase and a desorption phase with the aid of a sorption heat exchanger apparatus (10), which is configured as an open system, with cyclically switchable switching units (6a-6h), in order to carry out quasi-continuous conditioning, wherein outside air coming via one of two connections (5a, 5b) is guided by a plurality of branched line sections through the sorption heat exchanger apparatus, wherein, in the adsorption phase, outside air is channelled via in each case one of the connections (5a, 5b) through the sorption side (12a, 12b) of the respective sorption heat exchanger (11a, 11b) to a connection (17) for the building supply air and in the process is cooled and dehumidified on the sorption side (12a, 12b), wherein, in the desorption phase, heated outside air is channelled through the sorption side (12a, 12b) of the respective sorption heat exchanger (11a, 11b) and removed as outgoing air via an outgoing air connection (16), and wherein, in the intermediate cooling phase, outside air is channelled via in each case one of the connections (5a, 5b) through the cooling side (13a, 13b) of the respective sorption heat exchanger (11a, 11b) and removed as outgoing air via the outgoing air connection (16), **characterized in that** the air is fed free of heating to the connections (5a, 5b) of the sorption heat exchangers (11a, 11b) for untreated air through a separate line section (3) for supplying the at least two sorption heat exchangers (11a, 11b).

2. Method according to Claim 1, **characterized in that** the air is fed heated to the connections (5a, 5b) of the at least two sorption heat exchangers (11a, 11b) for heated air through a separate line section (4), which guides the air through a heat exchanger unit (2), to supply the at least two sorption heat exchangers (11a, 11b).

3. Apparatus (1, 9) for heating and guiding an air stream (8) which supplies at least two sorption heat exchangers (11a, 11b) with air for the purpose of direct fresh air conditioning, wherein the sorption heat exchangers (11a, 11b), having a respective sorption side (12a, 12b) and a respective cooling side (13a, 13b), can be alternately operated in an adsorption mode with an adsorption phase and in a regeneration mode with an intermediate cooling phase and a desorption phase with the aid of a sorption heat exchanger apparatus (10), which is configured as an open system, with cyclically switchable switching units (6a-6h), in order to carry out quasi-continuous conditioning, wherein outside air coming via one of two connections (5a, 5b) is guided by a plurality of branched line sections through the sorption heat exchanger apparatus (10), wherein, in the adsorption phase, outside air is channelled via in each case one of the connections (5a, 5b) through the sorption side (12a, 12b) of the respective sorption heat exchanger (11a, 11b) to a connection (17) for the building supply air and in the process is cooled and dehumidified on the sorption side (12a, 12b), wherein, in the desorption phase, heated outside air is channelled through the sorption side (12a, 12b) of the respective sorption heat exchanger (11a, 11b) and removed as outgoing air via an outgoing air connection (16), and wherein, in the intermediate cooling phase, outside air is channelled via in each case one of the connections (5a, 5b) through the cooling side (13a, 13b) of the respective sorption heat exchanger (11a, 11b) and removed as outgoing air via the outgoing air connection, **characterized in that**, for untreated air, a separate line section (3) for supplying the at least two or more sorption heat exchangers (11a, 11b) is provided and the air is thus fed free of heating to the connections (5a, 5b) of the sorption heat exchangers (11a, 11b).

4. Apparatus (1, 9) according to Claim 3, **characterized in that**, for heated air, a separate line section (4), which guides the air through a heat exchanger unit (2), is provided for supplying the at least two sorption heat exchangers (11a, 11b) via the corresponding connections (5a, 5b).

5. Apparatus (1, 9) according to either of Claims 3 and 4, **characterized in that** the separate line sections (3, 4) and the connections (5a, 5b) are coupled via a heat exchanger (2) and switching units (6) such that either heated or untreated air can be fed to the respective sorption heat exchangers (11a, 11b).

6. Apparatus (1) according to Claims 3 to 5, **characterized in that** a switching matrix (7), comprising various switching units (6), is provided, via which the heated and the untreated air is correspondingly fed to the at least two connections (5a, 5b) of the corresponding sorption heat exchangers (11a, 11b).

7. Apparatus (1, 9) according to Claims 3 to 6, **characterized in that** a multi-way valve, which constitutes the switching matrix, is provided, via which the heated and unheated air is correspondingly fed to the at least two connections (5a, 5b) of the corresponding sorption heat exchangers (11).

8. Apparatus (1, 9) according to Claims 3 to 7, **characterized in that** the heat exchanger unit (2) is positioned between the connections (5a and 5b) of the two sorption heat exchangers (11a, 11b), and the air guiding is controlled via two flaps (6).

9. Apparatus (1, 9) according to one of Claims 3 to 8, **characterized in that** the heat exchanger unit (2) is designed as a water/air heat exchanger.

10. Sorption heat exchanger apparatus (10), in particular an absorption heat exchanger apparatus configured as an open system, with cyclically switchable switching units (6a-6h) for direct fresh air conditioning, in which at least two sorption heat exchangers (11a, 11b), having a respective sorption side (12, 12b) and a respective cooling side (13a, 13b), are alternatively operated in an adsorption mode with an adsorption phase and in a regeneration mode with an intermediate cooling phase and a desorption phase, in order to carry out quasi-continuous conditioning, wherein outside air coming via one of two connections (5a, 5b) is guided by a plurality of branched line sections through the sorption heat exchanger apparatus (10), wherein, in the adsorption phase, outside air is channelled via in each case one of the connections (5a, 5b) through the sorption side (12a, 12b) of the respective sorption heat exchanger (11a, 11b) to a connection (17) for the building supply air and in the process is cooled and dehumidified on the sorption side (12a, 12b), wherein, in the desorption phase, heated outside air is channelled through the sorption side (12a, 12b) of the respective sorption heat exchanger (11a, 11b) and removed as outgoing air via an outgoing air connection (16), and wherein, in the intermediate cooling phase, outside air is channelled via in each case one of the connections (5a, 5b) through the cooling side (13a, 13b) of the respective sorption heat exchanger (11a, 11b) and removed as outgoing air via the outgoing air connection (16), **characterized in that** the sorption heat exchanger apparatus comprises an apparatus (1, 9) according to one of the preceding Claims 3 to 9.

## Revendications

1. Procédé pour chauffer et conduire un courant d'air (8), qui alimente en air au moins deux échangeurs de chaleur à sorption (11a, 11b) en vue du conditionnement direct d'air frais, dans lequel on fait fonctionner les échangeurs de chaleur à sorption (11a, 11b) comportant chacun un côté de sorption (12a, 12b) et un côté de refroidissement (13a, 13b) à l'aide d'un dispositif d'échangeur de chaleur à sorption (10) réalisé sous forme de système ouvert avec des unités de commutation (6a-6h) commutables de façon cyclique, alternativement dans un mode d'adsorption avec une phase d'adsorption et dans un mode de régénération avec une phase de refroidissement intermédiaire et une phase de désorption, afin d'opérer un conditionnement quasi continu, dans lequel on conduit de l'air extérieur à travers le dispositif d'échangeur de chaleur à sorption par un de deux raccords (5a, 5b) arrivant avec plusieurs parties de conduite ramifiées, dans lequel dans la phase d'adsorption on conduit de l'air extérieur respectivement par un des raccords (5a, 5b) à travers le côté de sorption (12a, 12b) de l'échangeur de chaleur à sorption respectif (11a, 11b) jusqu'à un raccord (17) pour l'air d'entrée du bâtiment et on le refroidit et on le déshumidifie ainsi sur le côté de sorption (12a, 12b), dans lequel dans la phase de désorption on conduit de l'air extérieur chauffé à travers le côté de sorption (12a, 12b) de l'échangeur de chaleur à sorption respectif (11a, 11b) et on le transporte sous forme d'air sortant par un raccord d'air sortant (16), et dans lequel dans la phase de refroidissement intermédiaire on conduit de l'air extérieur respectivement par un des raccords (5a, 5b) à travers le côté de refroidissement (13a, 13b) de l'échangeur de chaleur à sorption respectif (11a, 11b) et on le transporte sous forme d'air sortant par le raccord d'air sortant (16), **caractérisé en ce que** l'on envoie l'air sans chauffage aux raccords (5a, 5b) des échangeurs de chaleur à sorption (11a, 11b) pour l'air non traité à travers une partie de conduite séparée (3) pour l'alimentation desdits au moins deux échangeurs de chaleur à sorption (11a, 11b).

2. Procédé selon la revendication 1, **caractérisé en ce que** l'on envoie l'air chauffé aux raccords (5a, 5b) desdits au moins deux échangeurs de chaleur à sorption (11a, 11b) pour l'air chauffé à travers une partie de conduite séparée (4), qui conduit l'air à travers une unité d'échangeur de chaleur (2), pour l'alimentation desdits au moins deux échangeurs de chaleur à sorption (11a, 11b).

3. Dispositif (1, 9) pour chauffer et conduire un courant d'air (8), qui alimente en air au moins deux échangeurs de chaleur à sorption (11a, 11b) en vue du conditionnement direct d'air frais, dans lequel les échangeurs de chaleur à sorption (11a, 11b) comportant chacun un côté de sorption (12a, 12b) et un côté de refroidissement (13a, 13b) peuvent fonctionner à l'aide d'un dispositif d'échangeur de chaleur à sorption (10) réalisé sous forme de système ouvert avec des unités de commutation (6a-6h) commutables de façon cyclique, alternativement dans un mode d'adsorption avec une phase d'adsorption et dans un mode de régénération avec une phase de refroidissement intermédiaire et une phase de désorption, afin d'opérer un conditionnement quasi continu, dans lequel on conduit de l'air extérieur à travers le dispositif d'échangeur de chaleur à sorption (10) par un de deux raccords (5a, 5b) arrivant avec plusieurs parties de conduite ramifiées, dans lequel dans la phase d'adsorption on conduit de l'air extérieur respectivement par un des raccords (5a, 5b) à travers le côté de sorption (12a, 12b) de l'échangeur de chaleur à sorption respectif (11a, 11b) jusqu'à un raccord (17) pour l'air d'entrée du bâtiment et on le refroidit et on le déshumidifie ainsi sur le côté de sorption (12a, 12b), dans lequel dans la phase de désorption on conduit de l'air extérieur chauffé à travers le côté de sorption (12a, 12b) de l'échangeur de chaleur à sorption respectif (11a, 11b) et on le transporte sous forme d'air sortant par un raccord d'air sortant (16), et dans lequel dans la phase de refroidissement intermédiaire on conduit de l'air extérieur respectivement par un des raccords (5a, 5b) à travers le côté de refroidissement (13a, 13b) de l'échangeur de chaleur à sorption respectif (11a, 11b) et on le transporte sous forme d'air sortant par le raccord d'air sortant, **caractérisé en ce qu'**il est prévu pour l'air non traité une partie de conduite séparée (3) pour l'alimentation desdits au moins deux ou plus échangeurs de chaleur à sorption (11a, 11b) et l'air est ainsi envoyé sans chauffage aux raccords (5a, 5b) des échangeurs de chaleur à sorption (11a, 11b).

4. Dispositif (1, 9) selon la revendication 3, **caractérisé en ce qu'**il est prévu pour l'air chauffé une partie de conduite séparée (4), qui conduit l'air à travers une unité d'échangeur de chaleur (2), pour l'alimentation desdits au moins deux échangeurs de chaleur à sorption (11a, 11b) via les raccords correspondants (5a, 5b).

5. Dispositif (1, 9) selon les revendications 3 à 4, **caractérisé en ce que** les parties de conduite séparées (3, 4) et les raccords (5a, 5b) sont couplés par un échangeur de chaleur (2) et des unités de commutation (6), de telle manière que soit de l'air chauffé soit de l'air non traité puisse être envoyé aux échangeurs de chaleur à sorption respectifs (11a, 11b).

6. Dispositif (1, 9) selon les revendications 3 à 5, **caractérisé en ce qu'**il est prévu une matrice de commutation (7), comprenant différentes unités de commutation (6), par lesquelles l'air chauffé et l'air non traité est envoyé de façon correspondante auxdits au moins deux raccords (5a, 5b) des échangeurs de chaleur à sorption correspondants (11a, 11b).

7. Dispositif (1, 9) selon les revendications 3 à 6, **caractérisé en ce qu'**il est prévu une soupape à plusieurs voies réalisant la matrice de commutation, par laquelle l'air chauffé et l'air non chauffé est envoyé auxdits au moins deux raccords (5a, 5b) des échangeurs de chaleur à sorption correspondants (11a, 11b).

8. Dispositif (1, 9) selon les revendications 3 à 7, **caractérisé en ce que** l'unité d'échangeur de chaleur (2) est positionnée entre les raccords (5a et 5b) des deux échangeurs de chaleur à sorption (11a, 11b), et la conduite de l'air est réglée par deux clapets (6).

9. Dispositif (1, 9) selon une des revendications 3 à 8, **caractérisé en ce que** l'échangeur (2) est constitué par un échangeur de chaleur eau-air.

10. Dispositif d'échangeur de chaleur à sorption (10), en particulier dispositif d'échangeur de chaleur à sorption réalisé sous forme de système ouvert avec des unités de commutation (6a-6h) commutables de façon cyclique pour le conditionnement direct d'air frais, dans lequel au moins deux échangeurs de chaleur à sorption (11a, 11b) comportant chacun un côté de sorption (12a, 12b) et un côté de refroidissement (13a, 13b) fonctionnent alternativement dans un mode d'adsorption avec une phase d'adsorption et dans un mode de régénération avec une phase de refroidissement intermédiaire et une phase de désorption, afin d'opérer un conditionnement quasi continu, dans lequel on conduit de l'air extérieur à travers le dispositif d'échangeur de chaleur à sorption (10) par un de deux raccords (5a, 5b) arrivant avec plusieurs parties de conduite ramifiées, dans lequel dans la phase d'adsorption on conduit de l'air extérieur respectivement par un des raccords (5a, 5b) à travers le côté de sorption (12a, 12b) de l'échangeur de chaleur à sorption respectif (11a, 11b) jusqu'à un raccord (17) pour l'air d'entrée du bâtiment et on le refroidit et on le déshumidifie ainsi sur le côté de sorption (12a, 12b), dans lequel dans la phase de désorption on conduit de l'air extérieur chauffé à travers le côté de sorption (12a, 12b) de l'échangeur de chaleur à sorption respectif (11a, 11b) et on le transporte sous forme d'air sortant par un raccord d'air sortant (16), et dans lequel dans la phase de refroidissement intermédiaire on conduit de l'air extérieur respectivement par un des raccords (5a, 5b) à travers le côté de refroidissement (13a, 13b) de l'échangeur de chaleur à sorption respectif (11a, 11b) et on le transporte sous forme d'air sortant par le raccord d'air sortant (16), **caractérisé en ce que** le dispositif d'échangeur de chaleur à sorption présente un dispositif (1, 9) selon l'une quelconque des revendications 3 à 9.
